# FASCICULE DE BREVET EUROPEEN

(11) **EP 2 989 185 B1**
(45) Date de publication et mention de la délivrance du brevet: **04.11.2020**
(21) Numéro de dépôt: 14718434.5
(22) Date de dépôt: 18.04.2014
(51) Int. Cl.: C10L 1/238, C10L 1/2383

(54) **ADDITIF POUR AMELIORER LA STABILITE A L'OXYDATION DE CARBURANTS OU COMBUSTIBLES HYDROCARBONES LIQUIDES**
ADDITIV ZUR VERBESSERUNG DER OXIDATIONSSTABILITÄT VON KRAFTSTOFFE ODER FLÜSSIGEN HYDROKARBONKRAFTSTOFFE
ADDITIVE FOR IMPROVING THE OXIDATION STABILITY OF FUELS OR LIQUID HYDROCARBON FUELS

(30) Priorité: 25.04.2013 FR 1353765
(43) Date de publication de la demande: 02.03.2016
(73) Titulaire: Total Marketing Services, 92800 Puteaux (FR)
(72) Inventeur: PAPIN, Géraldine, F-69007 Lyon (FR); TORT, Frédéric, F-69530 Brignais (FR); VERMOREL, Christian, F-69007 Lyon (FR); CAINE, Pauline, 69390 VERNAISON (FR)
(74) Mandataire: Casalonga
(86) Numéro de dépôt international: PCT/EP2014/058014
(87) Numéro de publication internationale: WO 2014/173844

(56) Documents cités:
- EP-A2- 1 847 583
- WO-A1-2012/085865
- WO-A1-2013/007738
- US-A- 2 743 252

## Description

### DOMAINE TECHNIQUE

La présente invention concerne l'utilisation d'une résine alkyphénol-aldéhyde modifiée dans des compositions de carburants ou combustibles hydrocarbonés liquides.

### ETAT DE LA TECHNIQUE

Il est bien connu de l'homme du métier que certains carburants ou combustibles hydrocarbonés liquides stockés en présence d'air pendant de longues périodes de temps sont sujets à la formation de dépôts solides, en particulier à basse température.

Ces problèmes de dépôts sont liés à la présence de molécules instables contenues dans les carburants ou combustibles hydrocarbonés liquides. Ces molécules instables s'oxydent facilement en présence d'oxygène, en particulier à la lumière, sous l'effet des rayons ultraviolets (UV), et/ou en présence de traces de métaux qui catalysent la réaction d'oxydation et donc favorisent la formation de dépôt. Les molécules instables sensibles à l'oxydation sont principalement des molécules contenant des insaturations comme par exemple les oléfines dans les essences, les esters méthyliques ou éthyliques d'acides gras (EMAG et EEAG), les esters de graisses animales ou autres sources de triglycérides dans les Biodiesels ou encore les d'oléfines et les aromatiques partiellement hydrogénés dans les coupes de distillats issues du craquage catalytique ou thermique des produits issus du raffinage du pétrole.

Les dépôts qui s'accumulent sur les filtres sont à l'origine de l'obstruction des filtres. De nombreux additifs utilisés pour réduire la formation de dépôts ont été largement décrits dans la littérature. Parmi les solutions proposées, l'utilisation d'antioxydants conventionnels comme les antioxydants phénoliques ou aminés a été proposée. On peut citer à titre indicatif, la demande US2010/0075876 qui propose une composition comprenant au moins un antioxydant aminé cyclique, par exemple la diphénylamine et un antioxydant phénolique, le 2,6-di-tert-butyl-4-méthylphénol (BHT).

La demande WO 2013/007738 décrit une composition d'additifs destinée à améliorer les propriétés d'un gazole, et qui comprend au moins un désactivateur de métaux ou agent chélatant, au moins un anti-oxydant de type phénol encombré, au moins un agent dispersant et en option : au moins un neutraliseur d'acidité du type des amines, au moins un additif de tenue à froid, au moins un traceur ou marqueur, au moins un agent parfumant, au moins un agent biocide et au moins un passivateur de métaux.

La demande EP 1 847 583 décrit l'utilisation du produit de réaction d'un agent d'acylation succinique à substitution hydrocarbyle et d'une polyalkène amine, optionnellement en combinaison avec la di-tert-butythydroquinone (BHQ) pour prévenir ou retarder l'oxydation d'une composition liquide comprenant au moins 2% en poids d'une huile dérivée d'une matière végétale ou animale.

Le problème technique que l'invention se propose de résoudre est d'améliorer la stabilité à l'oxydation de compositions de carburants ou combustibles hydrocarbonés liquides.

La présente invention vise, en particulier, à stabiliser un biodiesel de type B100 pour obtenir une valeur de temps d'induction (Tind) Rancimat selon la norme EN 15751 supérieure ou égale à 8 heures. L'invention a pour but, en particulier, d'obtenir un gain en valeur de temps d'induction (ΔTind) supérieur ou égal à 2.

Les résines alkylphénol-aldéhyde issues de la condensation d'alkylphénol et d'aldéhyde sont connues de longue date comme agents d'amélioration de l'écoulement pour huiles minérales : voir par exemple EP 311 452 qui décrit des produits de condensation d'au moins 80 % mol de dialkylphénols et d'aldéhydes ayant de 1 à 30 atomes de carbone ; EP 857 776 qui décrit l'utilisation de résines alkylphénol-aldéhyde dans laquelle les groupements alkyle de l'alkylphénol ont de 4 à 12 atomes de carbone et l'aldéhyde de 1 à 4 atomes de carbone et ne contenant pas plus de 10 % mol d'alkylphénols ayant plus d'un groupe alkyle, en association avec des copolymères ou terpolymères éthylène /ester vinylique pour améliorer la fluidité d'huiles minérales ; EP1 584 673 qui décrit des résines alkylphénol-aldéhyde de Mn entre 1000 et 3000 issues de la condensation d'un aldéhyde en C1-C4 et d'un mélange d'alkylphénols majoritaire en monoalkylphénol, le groupement alkyle ayant de 1 à 20 atomes de carbone, destinées à améliorer les propriétés d'écoulement à froid de compositions de carburants .

Des résines alkylphénol-aldéhyde modifiées ont également été proposées comme additifs pour améliorer l'écoulement à froid d'huiles minérales : EP 1 767 610 décrit des résines alkylphénol dont la réaction de condensation avec les aldéhydes est menée en présence d'acides gras ayant de 2 à 50 atomes de carbone, ou leurs dérivés, tels que des esters.

Dans la demande de brevet WO2012/085865 et plus récemment dans la demande FR2012/55755, la société demanderesse a proposé de nouvelles résines alkylphénol-aldéhyde modifiées, utilisables pour améliorer la stabilité à froid de carburants et combustibles hydrocarbonés liquides.

Dans la continuité de ses travaux, la société demanderesse a découvert une nouvelle utilisation de ces résines d'alkylphénol-aldéhyde modifiées dans des compositions de carburants ou combustibles hydrocarbonés liquides.

En particulier, l'objet de la présente invention concerne l'utilisation d'au moins une résine alkylphénol-aldéhyde modifiée comme additif améliorant la stabilité à l'oxydation d'une composition de carburant ou combustible hydrocarboné liquide, ladite résine alkylphénol-aldéhyde modifiée étant susceptible d'être obtenue par réaction de Mannich d'une résine de condensation alkylphénol-aldéhyde
▪ avec au moins un aldéhyde et/ou une cétone ayant de 1 à 8 atomes de carbone, de préférence de 1 à 4 atomes de carbone;
▪ et au moins un composé hydrocarboné ayant au moins un groupement alkylmonoamine ou alkylpolyamine (alkylamine), ayant entre 1 et 30 atomes de carbone, de préférence entre 4 et 30 atomes de carbone,
   ladite résine de condensation alkylphénol-aldéhyde étant elle-même susceptible d'être obtenue par condensation
▪ d'au moins un alkylphénol substitué par au moins un groupement alkyle, linéaire ou ramifié, ayant de 1 à 30 atomes de carbone, de préférence un monoalkylphénol,
▪ avec au moins un aldéhyde et/ou une cétone ayant de 1 à 8 atomes de carbone, de préférence de 1 à 4 atomes de carbone.

Une telle utilisation permet d'améliorer la stabilité au stockage de la composition de carburant ou combustible hydrocarboné liquide à une température inférieure à 0°C, de préférence inférieure à -5°C, plus préférentiellement inférieure ou égale à -10°C.

L'utilisation permet de réduire la quantité de dépôts formés lors du stockage de la composition de carburant ou combustible hydrocarboné liquide.

Selon un mode de réalisation particulier préférentiel, la résine alkylphénol-aldéhyde modifiée est susceptible d'être obtenue à partir d'au moins un alkylphénol substitué en para, de préférence à partir du p-nonylphénol.

Selon un autre mode de réalisation particulier préférentiel, la résine alkylphénol-aldéhyde modifiée est susceptible d'être obtenue à partir d'au moins un aldéhyde et/ou une cétone choisi parmi le formaldéhyde, l'acétaldéhyde, le propionaldéhyde, le butyraldéhyde, le 2-éthyl hexanal, le benzaldéhyde, l'acétone, et de préférence à partir d'au moins le formaldéhyde.

Selon une variante, la résine alkylphénol-aldéhyde modifiée est susceptible d'être obtenue à partir d'au moins une alkylamine ayant au moins un groupement amine primaire, et avantageusement au moins un composé dont tous leurs groupements amine sont des amines primaires.

Selon une autre variante, la résine alkylphénol-aldéhyde modifiée est susceptible d'être obtenue à partir de p-nonylphénol, de formaldéhyde et d'au moins un composé hydrocarboné ayant au moins un groupement alkylmonoamine ou alkylpolyamine.

Selon un autre mode de réalisation particulier préférentiel, la résine alkylphénol-aldéhyde modifiée est susceptible d'être obtenue à partir d'au moins une alkylamine à chaîne grasse ou d'un mélange d'alkylamines à chaîne grasse, et de préférence d'alkylamine(s) ayant un nombre d'atomes de carbone entre 12 et 24, de préférence entre 12 et 22.

Selon une variante, la résine alkylphénol-aldéhyde modifiée a une viscosité à 50°C mesurée à l'aide d'un rhéomètre dynamique à une vitesse de cisaillement de 100 s⁻¹ sur une solution de ladite résine diluée avec 30% en masse d'un solvant aromatique comprise entre 1000 et 10 000 mPa.s, de préférence 1 500 et 6 000 mPa.s et avantageusement entre 2 500 et 5 000 mPa.s.

Selon certains modes de réalisation particuliers, l'objet de l'invention présente également une ou plusieurs caractéristiques énumérées ci-dessous:
✔ la résine alkylphénol-aldéhyde modifiée est utilisée comme additif sous une forme diluée dans un solvant, de préférence aromatique.
✔ la résine alkylphénol-aldéhyde modifiée est utilisée dans la composition de carburant ou combustible hydrocarboné liquide en association avec un ou plusieurs additifs addititionnels.
✔ les additifs additionnels sont choisis parmi les dispersants/détergents, les huiles porteuses, les désactivateurs de métaux, les passivateurs métalliques, les antioxydants, les colorants, les additifs antistatiques, les inhibiteurs de corrosion, les biocides, les marqueurs, les stabilisateurs thermiques, les émulsifieurs, les additifs antistatiques, les agents réducteurs de frottements, les surfactants, les améliorants de cétanes, les agents anti-trouble, les additifs améliorant la conductivité, les réodorants, les additifs d'onctuosité, les lubrifiants et leurs mélanges.
✔ la composition de carburant ou combustible hydrocarboné liquide est additivée avec une quantité de résine alkylphénol-aldéhyde modifiée comprise entre 5 et 5000 ppm massique, de préférence entre 10 et 2000 ppm, plus préférentiellement entre 50 et 1200 ppm, encore plus préférentiellement entre 50 et 600 ppm.
✔ la composition de carburant ou combustible hydrocarboné liquide comprend un carburant ou combustible hydrocarboné liquide choisi parmi les gazoles, les carburants diesel, les essences, les biocarburants, les carburants jet, les fiouls domestiques (FOD) et les fiouls lourds.
✔ la composition de carburant ou combustible hydrocarboné liquide comprend un carburant ou combustible choisi parmi les distillats moyens de température d'ébullition comprise entre 100 et 500°C, de préférence 140 à 400 °C.
✔ la composition carburant ou combustible hydrocarboné liquide comprend des huiles végétales et/ou animales et/ou leurs esters et/ou, des biodiesels d'origine animale et/ou végétale, de préférence, les esters sont des esters esters méthyliques d'acides gras (EMAG) ou éthyliques d'acides gras (EEAG), en particulier des esters méthyliques d'huiles végétales (EMHV) ou esters éthyliques d'huiles végétales (EEHV).
✔ la composition carburant ou combustible hydrocarboné liquide est un biodiesel de type B100 et dont la valeur du temps d'induction (T_{ind}) obtenue par un test Rancimat selon la norme EN 15751 est supérieure ou égale à 8 heures, avantageusement un gain en valeur de temps d'induction (ΔT_{ind}) obtenu par le test Rancimat selon la norme EN 15751 est supérieur ou égal à 2.

### EXPOSE DETAILLE DE L'INVENTION

D'autres avantages et caractéristiques ressortiront plus clairement de la description qui va suivre. Les modes particuliers de réalisation de l'invention sont donnés à titre d'exemples non limitatifs et représentés à l'unique dessin annexé dans lequel :

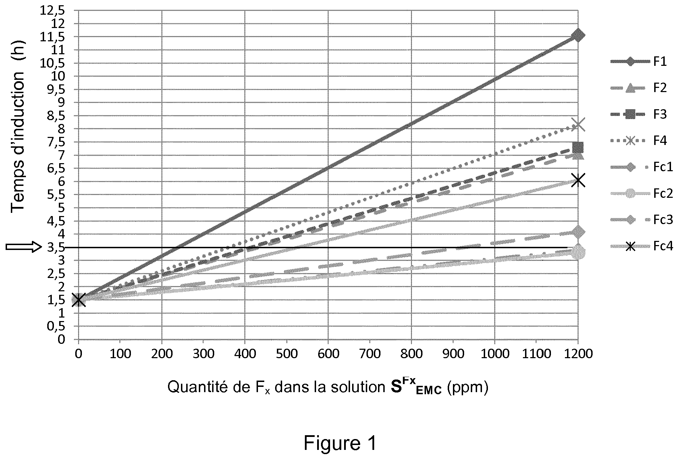

- la figure 1 représente la quantité d'additif Fₓ ajoutée à la solution S^{Fx}_{EMC} (ppm) en fonction du temps d'induction obtenu selon un test Rancimat (norme EN 15751). D'autres avantages et caractéristiques ressortiront plus clairement de la description qui va suivre de modes particuliers de réalisation de l'invention donnés à titre d'exemples non limitatifs.

Selon un premier mode de réalisation particulier, une composition de carburant ou combustible hydrocarboné liquide comprend au moins une résine alkylphénol-aldéhyde modifiée. En particulier, la composition de carburant ou combustible hydrocarboné liquide est additivée avec une quantité de résine alkylphénol-aldéhyde modifiée comprise, de préférence, entre 1 et 5000 ppm massique, de préférence entre 5 et 2000 ppm, plus préférentiellement entre 10 et 1200 ppm, encore plus préférentiellement entre 50 et 600 ppm. Pour de telles gammes de produit ajouté, la résine alkylphénol-aldéhyde modifiée est considérée comme un additif.

La résine alkylphénol-aldéhyde modifiée est obtenue par réaction de Mannich d'une résine de condensation alkylphénol-aldéhyde :
∘ avec au moins un aldéhyde et/ou une cétone ayant de 1 à 8 atomes de carbone, de préférence de 1 à 4 atomes de carbone;
∘ et au moins un composé hydrocarboné ayant au moins un groupement alkylmonoamine ou alkylpolyamine ayant entre 1 et 30 atomes de carbone, de préférence entre 4 et 30 atomes de carbone, dénommé dans ce qui suit « alkylamine » pour des raisons de simplification et de clarté.

La résine de condensation alkylphénol-aldéhyde est elle-même obtenue par condensation :
∘ d'au moins un alkylphénol substitué par au moins un groupement alkyle, linéaire ou ramifié, ayant de 1 à 30 atomes de carbone, de préférence un monoalkylphénol,
∘ avec au moins un aldéhyde et/ou une cétone ayant de 1 à 8 atomes de carbone, de préférence de 1 à 4 atomes de carbone.

La résine alkylphénol-aldéhyde modifiée selon l'invention est, avantageusement, obtenue à partir d'au moins un alkylphénol substitué en para. On utilisera de préférence, le nonylphénol.

Le nombre moyen de noyaux phénoliques par molécule de résine nonylphénol-aldéhyde préféré est, de préférence, supérieur à 6 et inférieur ou égal à 25 et, plus préférentiellement compris entre 8 et 17, et encore plus préférentiellement entre 9 et 16, noyaux phénoliques par molécule. Le nombre de noyaux phénoliques peut être déterminé par résonance magnétique nucléaire (RMN) ou chromatographie à perméation de gel (GPC).

Selon une variante, la résine alkylphénol-aldéhyde modifiée peut être obtenue à partir d'au moins un aldéhyde et/ou une cétone choisi parmi le formaldéhyde, l'acétaldéhyde, le propionaldéhyde, le butyraldéhyde, le 2-éthyl-hexanal, le benzaldéhyde, l'acétone, de préférence au moins le formaldéhyde.

Selon un mode de réalisation particulier, la résine alkylphénol-aldéhyde modifiée est obtenue à partir d'au moins une alkylamine ayant au moins un groupement amine primaire et/ou secondaire. En particulier, l'alkylamine est choisi parmi les amines primaires ou secondaires substituées par, respectivement, un ou deux groupements alkyles, de préférence, de 12 et 24 atomes de carbone, plus préférentiellement de 12 et 22 atomes de carbone.

Selon une variante préférée, la résine alkylphénol-aldéhyde modifiée est obtenue à partir d'au moins une alkylamine ayant au moins un groupement amine primaire. En particulier, la résine alkylphénol-aldéhyde modifiée peut avantageusement être obtenue à partir d'au moins une alkylamine ayant au moins un groupement amine primaire et au moins un composé dont tous leurs groupements amine sont des amines primaires. L'alkylamine est, de préférence, une alkylamine à chaîne grasse ayant entre 12 et 24 atomes de carbone, de préférence entre 12 et 22 atomes de carbone.

Selon une autre variante préférée, la résine alkylphénol-aldéhyde modifiée est obtenue à partir d'au moins une alkylamine ayant au moins un groupement amine primaire et comprenant une chaîne grasse ayant entre 12 et 24 atomes de carbone, de préférence entre 12 et 20 atomes de carbone.

Les alkylamines commerciales ne sont en général pas des composés purs mais des mélanges. Parmi les alkylamines commercialisées qui conviennent, on peut notamment citer les alkylamines à chaîne grasse commercialisées sous les dénominations : Noram®, Trinoram®, Duomeen®, Dinoram®, Trinoram®, Triameen®, Armeen®, Polyram®, Lilamin® et Cemulcat®.

On peut citer à titre d'exemple préféré, la Trinoram S qui est une dipropylènetriamine de suif, connue également sous la dénomination N-(Tallowalkyl)dipropylenetriamine.

Selon un mode de réalisation particulier, la résine alkylphénol-aldéhyde modifiée est utilisée comme additif sous une forme diluée dans un solvant ou un dispersant. A titre d'exemple, le solvant ou le dispersant est choisi parmi les hydrocarbures aliphatiques et/ou aromatiques ou les mélanges d'hydrocarbures, par exemple les fractions d'essence, du kérosène, le décane, le pentadécane, le toluène, le xylène, l'éthylbenzène, les mélanges de solvants commerciaux comme Solvarex 10, Solvarex 10 LN, Solvent Naphta, Shellsol AB, Shellsol D, Solvesso 150, Solvesso 150 ND, Solvesso 200, Exxsol, ISOPAR. Le solvant ou le dispersant est de préférence aromatique. Le solvant ou le dispersant utilisé peut également contenur un adjuvant de dissolution polaire, comme le 2-éthylhexanol, le décanol, l'isodécanol et/ou l'isotridécanol.

La concentration massique de la résine alkylphénol-aldéhyde modifiée diluée dans le solvant ou le dispersant peut, avantageusement, varier de 1 à 99,5%, de préférence de 5 à 95%, plus préférentiellement de 10 à 90% et encore plus préférentiellement de 30 à 90%.

La viscosité de la résine de condensation alkylphénol-aldéhyde modifiée, diluée avec 30% en masse de solvant aromatique mesurée à 50°C à l'aide d'un rhéomètre dynamique avec une vitesse de cisaillement de 100 s⁻¹ est, de préférence, comprise entre 1000 et 10 000 mPa.s, de préférence entre 1500 et 6000 mPa.s, et avantageusement entre 2500 et 5000 mPa.s.

La résine alkylphénol-aldéhyde modifiée peut également être utilisée dans une composition de carburant ou combustible hydrocarboné liquide en association avec un ou plusieurs additifs addititionnels.

Outre la résine alkylphénol-aldéhyde modifiée décrite ci-dessus, la composition de carburant ou combustible hydrocarboné liquide peut contenir des additifs additionnels choisis parmi les dispersants/détergents, les huiles porteuses, les désactivateurs de métaux, les passivateurs métalliques, les antioxydants, les colorants, les additifs antistatiques, les inhibiteurs de corrosion, les biocides, les marqueurs, les stabilisateurs thermiques, les émulsifieurs, les additifs antistatiques, les agents réducteurs de frottements, les surfactants, les améliorants de cétanes, les agents anti-trouble, les additifs améliorant la conductivité, les réodorants, les additifs d'onctuosité, les lubrifiants et leurs mélanges.

Parmi les autres additifs additionnels, on peut citer particulièrement :
a) les additifs procétane, notamment (mais non limitativement) choisis parmi les nitrates d'alkyle, de préférence le nitrate de 2-éthyl hexyle, les peroxydes d'aroyle, de préférence le peroxyde de benzyle, et les peroxydes d'alkyle, de préférence le peroxyde de di ter-butyle ;
b) les additifs anti-mousse, notamment (mais non limitativement) choisis parmi les polysiloxanes, les polysiloxanes oxyalkylés, et les amides d'acides gras issus d'huiles végétales ou animales ; des exemples de tels additifs sont donnés dans EP0861182, EP0663000, EP0736590 ;
c) les additifs détergents et/ou anti-corrosion, notamment (mais non limitativement) choisis dans le groupe constitué par les amines, les succinimides, les alkénylsuccinimides, les polyalkylamines, les polyalkyles polyamines et les polyétheramines ; des exemples de tels additifs sont donnés dans EP0938535, US2012/0010112 et WO2012/004300 ;
d) les additifs de lubrifiance ou agent anti-usure, notamment (mais non limitativement) choisi dans le groupe constitué par les acides gras et leurs dérivés ester ou amide, notamment le monooléate de glycérol, et les dérivés d'acides carboxyliques mono- et polycycliques ; des exemples de tels additifs sont donnés dans les documents suivants: EP0680506, EP0860494, WO1998/04656, EP0915944, FR2772783, FR2772784 ;
e) les additifs de point de trouble, notamment (mais non limitativement) choisis dans le groupe constitué par les terpolymères oléfine à chaîne longue/ester (méth)acrylique /maléimide, et les polymères d'esters d'acides fumarique /maléique. Des exemples de tels additifs sont donnés dans EP0071513, EP0100248, FR2528051, FR2528051, FR2528423, EP112195, EP0172758, EP0271385, EP0291367 ;
f) les additifs d'anti-sédimentation et/ou dispersants de paraffines notamment (mais non limitativement) choisis dans le groupe constitué par les copolymères acide (méth)acrylique/(méth)acrylate d'alkyle amidifié par une polyamine, les alkénylsuccinimides de polyamine, les dérivés d'acide phtalamique et d'amine grasse à double chaîne ; des résines alkyl phénol/aldéhyde différentes des résines alkylphénol/aldéhyde selon l'invention ; des exemples de tels additifs sont donnés dans EP0261959, EP0593331, EP0674689, EP0327423, EP0512889, EP0832172, US2005/0223631, US5998530, WO1993/014178 ;
g) les additifs polyfonctionnels d'opérabilité à froid choisis notamment dans le groupe constitué par les polymères à base d'oléfine et de nitrate d'alkényle tels que décrits dans EP0573490 ;
h) des additifs améliorant la tenue à froid et la filtrabilité (CFI), tels que les copolymères éthylène/vinyl acétate (EVA) et/ou éthylène/vinyl propionate (EVP), les terpolymères éthylène/ acétate de vinyle/ versatate de vinyle (E/VA/VEOVA) ; les copolymères anhydride maléique/alkyl(méth)acrylate amidifiés susceptibles d'être obtenus par réaction d'un copolymère anhydride maléique/alkyl(méth)acrylate et d'une alkylamines ou polyalkylamine ayant une chaîne hydrocarbonée de 4 et 30 atomes de carbone, de préférence, de 12 à 24 atomes de carbone; les copolymères d'alpha-oléfine/anhydride maléique amidifiés susceptibles d'être obtenus par réaction d'un copolymère d'alpha-oléfine/anhydride maléique et d'une alkylamine ou polyalkylamine, l'alpha-oléfine pouvant être choisi parmi les alpha-oléfine en C₁₂-C₄₀, de préférence, en C₁₆-C₂₀ et l'alkylamine ou la polyalkylamine ayant, avantageusement, une chaîne hydrocarbonée de 4 et 30 atomes de carbone, de préférence de 12 à 24 atomes de carbone. A titre d'exemples de terpolymères, on peut citer ceux qui sont décrits dans EP01692196, WO2009/106743 et WO2009/106744.
i) d'autres antioxydants de type phénoliques encombrés ou aminés de type paraphénylène diamine alkylés ;
j) les passivateurs de métaux, tels que les triazoles, les benzotriazoles alkylés et les tolutriazoles alkylés ;
k) les séquestrants de métaux comme la disalicylidène propane diamine (DMD)
l) les neutralisateurs d'acidité tels que les alkylamines cycliques

En particulier, la composition de carburant et de combustible hydrocarboné liquide peut en plus de la résine alkylphénol-aldéhyde modifiée contenir un additif de filtrabilité ou l'association d'un premier et d'un second additif de filtrabilité tel que décrit dans la demande de brevet FR2012/055755 déposée le 19/06/2012 par la demanderesse, citée à titre d'exemple.

La composition de carburant et de combustible hydrocarboné liquide peut, avantageusement, contenir un additif de filtrabilité choisi parmi :
∘ les terpolymères de (méth)acrylate d'alkyle en C₄ à C₂₂, de préférence en C₁₈ à C₂₂, d'alpha-oléfine en C₂₀ à C₂₄ et de maléimide N-substitué par une chaine hydrocarbonée ayant entre 4 et 30, de préférence entre 14 et 20, plus préférentiellement entre 16 et 18 atomes de carbone, étant entendu que la structure maléimide N-substitué fermée peut également, selon les conditions d'utilisation ou de stockage, s'ouvrir pour se présenter sous une structure amide/ sel d'ammonium ou diamide ouverte,
∘ les homopolymères de (méth)acrylate d'alkyle en C₁ à C₄₀, de préférence les polyacrylates d'alkyle en C₁ à C₄₀, plus préférentiellement en C₈ à C₂₄,
∘ les sels d'ammonium de mono ou polyacide carboxylique comprenant au moins une chaîne hydrocarbonée, linéaire ou ramifiée, saturée ou insaturée et ayant entre 4 et 30 atomes de carbone.

L'association d'un premier et d'un second additif de filtrabilité peut correspondre à au moins un premier additif de filtrabilité choisi parmi les homopolymères de (méth)acrylate d'alkyle en C₁ à C₄₀, de préférence les polyacrylates d'alkyle en C₈ à C₂₄ et au moins un second additif de filtrabilité choisi parmi :
∘ les terpolymères de (méth)acrylate d'alkyle en C₄ à C₂₂, d'alpha-oléfine en C₂₀ à C₂₄ et de maléimide N-substitué par une chaine hydrocarbonée ayant entre 4 et 30 atomes de carbone,
∘ les sels d'ammonium de mono ou polyacide carboxylique comprenant au moins une chaîne hydrocarbonée, linéaire ou ramifiée, saturée ou insaturée et ayant entre 4 et 30 atomes de carbone.

Chaque additif peut être incorporé séparément dans la composition de carburant et de combustible hydrocarboné liquide, éventuellement, dilué avec un ou plusieurs agents solvants ou dispersants décrits précédemment. Selon une variante, des compositions d'additifs peuvent, par exemple, être préparées avant incorporation dans la composition de carburant et de combustible hydrocarboné liquide en solubilisant ou en dispersant chaque constituant, séparément ou en mélange, avec un ou plusieurs agents solvants ou dispersants décrits précédemment.

L'additif de filtrabilité additionnel peut être présent dans la composition de carburant ou combustible hydrocarboné liquide en quantité allant de 0,5 à 1000 ppm, de préférence de 1 à 500 ppm, plus préférentiellement de 1 à 400 ppm.

La composition de carburant ou combustible hydrocarboné liquide comprend, avantageusement, un carburant ou combustible hydrocarboné liquide choisi parmi les gazoles, les carburants diesel, les essences, les biocarburants, les carburants jet, les fiouls domestiques (FOD) et les fiouls lourds.

Selon un mode de réalisation particulier, la composition de carburant ou combustible hydrocarboné liquide comprend un carburant ou combustible choisi parmi les distillats moyens de température d'ébullition comprise entre 100 et 500°C, de préférence 140 à 400 °C, plus préférentiellement entre 120 à 500 °C, encore plus préférentiellement de 140 à 400 °C.

Ces distillats moyens peuvent, par exemple, être choisis parmi les distillats obtenus par distillation directe d'hydrocarbures bruts, les distillats sous vide, les distillats hydrotraités, des distillats issus du craquage catalytique et/ou de l'hydrocraquage de distillats sous vide, les distillats résultant de procédés de conversion type ARDS (par désulfuration de résidu atmosphérique) et/ou de viscoréduction, les distillats issus de la valorisation des coupes Fischer Tropsch, les distillats résultant de la conversion BTL (acronyme du terme anglais *biomass to liquid*) de la biomasse végétale et/ou animale, et/ou leurs mélanges.

Les carburants et combustibles liquides hydrocarbonés peuvent également contenir des distillats issus des opérations de raffinage plus complexes que ceux issus de la distillation directe des hydrocarbures. Les distillats peuvent, par exemple, provenir des procédés de craquage, hydrocraquage et/ou craquage catalytique et des procédés de viscoréduction.

Les carburants et combustibles liquides hydrocarbonés peuvent également contenir de nouvelles sources de distillats, parmi lesquelles on peut notamment citer :
- les coupes les plus lourdes issues des procédés de craquage et de viscoréduction concentrées en paraffines lourdes, comprenant plus de 18 atomes de carbone,
- les distillats synthétiques issus de la transformation du gaz tels que ceux issus du procédé Fischer Tropsch,
- les distillats synthétiques résultant du traitement de la biomasse d'origine végétale et/ou animale, comme notamment le NexBTL.
- et les huiles végétales et/ou animales et/ou leurs esters, de préférence, les esters méthyliques d'acides gras (EMAG) ou éthyliques d'acides gras (EEAG), en particulier des esters méthyliques d'huiles végétales (EMHV) ou esters éthyliques d'huiles végétales (EEHV).
- les huiles végétales et/ou animales hydrotraitées et/ou hydrocraquées et/ou hydrodéoxygénées (HDO)
- ou encore les biodiesels d'origine animale et/ou végétale.

La composition de carburant ou combustible hydrocarboné liquide peut comprendre uniquement des nouvelles sources de distillats ou être composée d'un mélange avec des distillats moyens pétroliers classiques comme base carburant type diesel et/ou base de fioul domestique. ces nouvelles sources de distillats comprennent en général de longues chaînes paraffiniques supérieures ou égales à 10 atomes de carbone et, préférentiellement de C₁₄ à C₃₀.

En général, la teneur en soufre des compositions de carburants et combustibles liquides hydrocarbonés est inférieure à 5000 ppm, de préférence inférieure à 500 ppm, et plus préférentiellement inférieure à 50 ppm, voire même inférieure à 10 ppm et avantageuse sans soufre, notamment pour les carburants de type gazole.

### EXEMPLES

### Synthèse d'une résine alkylphénol-aldéhyde modifiée selon l'invention, notée C₀

Dans une première étape, on prépare une résine alkylphénol-aldéhyde par condensation de para-nonylphénol et de formaldéhyde (par exemple selon le mode opératoire décrit dans EP 857 776) de viscosités à 50°C (mesurées à 50°C à l'aide d'un rhéomètre dynamique avec une vitesse de cisaillement de 10 s⁻¹ sur la résine diluée avec 30% en masse de solvant aromatique (Solvesso 150) comprises entre 1800 et 4800 mPa.s.

Dans une seconde étape, la résine alkylphénol-aldéhyde issue de la première étape est modifiée par réaction de Mannich par ajout de 2 équivalents molaires de formaldéhyde et 2 équivalents molaires de dipropylènetriamine de suif, connue sous la dénomination N-(Tallowalkyl)dipropylenetriamine et commercialisé par exemple sous la dénomination Trinoram S, par rapport à la résine alkylphénol-aldéhyde.

Les caractéristiques de la résine obtenue sont répertoriées dans le tableau 1 suivant :

**Tableau 1**

| N° résine | alkylamine utilisée | Matières sèches | Viscosité à 50°C (mPa.s)* | Nombre moyen de noyaux phénoliques par molécule de résine** |
|---|---|---|---|---|
| | | (1g-30min-200°C) | | |
| **C₀** | Trinoram S | 70,10% | 4855 | 14,1 |

| | | | | |
|---|---|---|---|---|
| *mesure sur une résiné diluée avec 70 % massique de Solvesso 150, vitesse cisaillement 10s⁻¹ à l'aide d'un rhéomètre Haake RheoWin ** mesuré par résonance magnétique nucléaire (RMN) | | | | |

### Test de stabilité à l'oxydation et au stockage

### . Composants de départ

- **S** : solvant aromatique commercialisé sous le nom « Solvarex 10 »
- **C₁** : résine alkylphénol-aldéhyde modifiée **C₀** diluée avec 50% en masse de solvant aromatique (Solvesso 150)
- **C₂** : 2,6-di-tert-butyl-4-méthylphénol (BHT) (numéro CAS 128-37-0); pureté à 99% en masse
- **C₃** : 2,6-di-tert-butyl-4-Sec-butylphénol (numéro CAS 17540-75-9) ; pureté à 95% en masse
- **C₄** : 2,6-di-tert-butyl-4-nonylphénol (numéro CAS 4306-88-1) ; pureté à 90% en masse
- **C₅** : 2-tert-butyl phénol (numéro CAS 88-18-6) à 90% en masse
- **C₆** : N,N-disalicylidène-1,2-diaminopropane (DMD ; numéro CAS 94-91-7) diluée avec 50 % en masse de solvant aromatique (solvarex 10)

Les compositions C₂, C₃, C₄ et C₅ sont des phénols stériquement encombrés connus comme composés antioxydants. Le BHT (**C₂**) est un additif antioxydant conventionnel couramment utilisé pour les esters méthyliques d'acides gras (EMAG), en particulier, pour les d'esters méthyliques d'huiles végétales (EMHV). La composition C₆ contient du DMD connu comme additif séquestrant/chélatant de métaux.

### . Formulations Fₓ

Le pourcentage massique des différents composants de chaque formulation F₁ à F₄ et de chaque formulation Fc₁ à Fc₄ évaluée à titre comparatif est détaillé dans le tableau 2 ci-dessous :

**Tableau 2**

| **Fₓ (% en masse)** | **F₁** | **F₂** | **F₃** | **F₄** | **F_{c1}** | **F_{c2}** | **F_{c3}** | **F_{c4}** |
|---|---|---|---|---|---|---|---|---|
| **C₁** | 100 | 50 | 50 | 50 | | | | |
| **C₂** | | | | | 45 | 25 | 40 | 25 |
| **C₃** | | | | 48 | | | | |
| **C₄** | | 50 | 48 | | | | | |
| **C₅** | | | | | | 75 | 60 | 73 |
| **C₆** | | | 2 | 2 | | | | 2 |
| S | | | | | 55 | | | |
| **Tₐₙₜᵢₒₓ*** **(%)** | 50 | 70 | 68,2 | 70,6 | 45 | 92,25 | 93,6 | 91,45 |

| | | | | | | | | |
|---|---|---|---|---|---|---|---|---|
| * Taux en matière active correspondant au pourcentage massique de matière actif des composés antioxydants ou composés intervenant dans l'effet antioxydant à savoir la résine C₀, les composés phénoliques encombrés et le séquestrant/chélatant de métaux (DMD). | | | | | | | | |

### .Exemple 1 : Test de stabilité à l'oxydation (Rancimat) et stabilité au stockage sur une solution d'esters méthyliques d'huile de colza (EMC)

Les propriétés antioxydantes de différentes formulations F₁ à F₄ et Fc₁ à Fc₄ ont été évaluées par un test Rancimat selon la norme DIN EN 15751, sur une solution d'esters méthyliques d'huile de colza (EMC) (commercialisée par la société Mosselman sous le nom EMC). Dans le cadre d'un test Rancimat, on détermine un temps d'induction (T_{Ind}) exprimé en heure suivant le mode opératoire spécifié par la norme NF EN 15751. On entend par temps d'induction, le temps d'écoulement entre le début de la mesure et le moment où la formation des produits d'oxydation commence à augmenter rapidement. Le temps d'induction est représentatif de la stabilité à l'oxydation. Plus la période d'induction est importante, plus la solution EMC est stable à l'oxydation. La solution EMC a été choisie car elle possède une valeur de temps d'induction très faible (1, 5 heure) et est, à ce titre, particulièrement discriminante.

Les mesures ont été effectuées sur la solution initiale de EMC, notée **S⁰_{EMC}** et sur la solution de EMC additivée avec 1200 ppm des différentes formulations F₁ à F₄ et Fc₁ à Fc₄, notée **S^{Fx}_{EMC}**. Les résultats sont répertoriés dans le tableau 3 ci-après et représentés graphiquement à la figure 1.

En outre, on a déterminé graphiquement à partir de la figure 1 obtenue, la masse de chaque formulation F₁ à F₄ et Fc₁ à Fc₄ (m_{Fx}) nécessaire pour atteindre un temps d'induction de 3,5 heures c'est-à-dire la masse nécessaire pour augmenter le Rancimat de la solution **S⁰_{EMC}** de 2 heures (flèche à la figure 1). La masse de matière active nécessaire pour atteindre un temps d'induction de 3,5 heures a également été calculée à partir des valeurs "m_{Fx}" et du taux de matière active "Tₐₙₜᵢₒₓ" respectif, pour chaque formulation F₁ à F₄ et Fc₁ à Fc₄.

Enfin, la stabilité au stockage de chaque solution **S^{Fx}_{EMC}** a été déterminée pour différentes températures de stockage, notée **Tₛ.** Pour cette mesure, 50 ml de solution **S^{Fx}_{EMC}** sont placés dans une fiole tronconique en verre de 60 ml et stockée à la température de stockage (**Tₛ**). On mesure la phase décantée en fond de fiole à intervalle de temps régulier, à savoir tous les 24 heures. Si le dépôt est inférieur à 0,4 ml, on estime que la solution est stable. A partir d'une quantité de dépôt supérieure à 0,4 ml, on considère que la solution est instable.

Les résultats obtenus sont répertoriés dans le tableau 3 suivant :

**Tableau 3**

| **Fₓ** | **F₁** | **F₂** | **F₃** | **F₄** | **F_{c1}** | **F_{c2}** | **F_{c3}** | **F_{c4}** |
|---|---|---|---|---|---|---|---|---|
| T_{Ind}**^{S}₀^{EMC}** (h) | 1,5 | 1,5 | 1,5 | 1,5 | 1,5 | 1,5 | 1,5 | 1,5 |
| T_{IND}**^{S}_{Fx}^{EMC}** (h) | **11,56** | 7,06 | 7,3 | 8,17 | 3,39 | 3,3 | 4,09 | 6,06 |
| m_{Fx} (ppm) | **240** | 430 | 420 | 360 | 1200 | 1200 | 940 | 540 |
| m_{Fx} x **Tₐₙₜᵢₒₓ** (ppm) | **120** | 301 | 286 | 254 | 540 | 1007 | 880 | 494 |

| Stabilité au stockage | | | | | | | | |
|---|---|---|---|---|---|---|---|---|
| Tₛ (°C) | | | | | | | | |
| **20°C** | **++** | **++** | **++** | **++** | **++** | **++** | **++** | **++** |
| **-5°C** | **++** | **++** | **++** | **++** | **-** | **++** | **++** | **++** |
| **-10°C** | **++** | **++** | **++** | **++** | **-** | **++** | **++** | **++** |

| | | | | | | | | |
|---|---|---|---|---|---|---|---|---|
| "**-**" : instable après 24heures de stockage "**++**" : stable durant au moins 3 semaines de stockage | | | | | | | | |

### Stabilité à l'oxydation

A partir des résultats obtenus (tableau 3 et figure 1), on constate que la formulation **F₁** à 50% en masse de la résine C₀ selon l'invention est la formulation la plus efficace comme additif antioxydant. Les formulations comprenant la résine **C₀** selon l'invention (**F₁, F₂, F₃** et **F₄**) ont toutes une efficacité améliorée sur la stabilité à l'oxydation comparativement aux formulations connues d'antioxydant selon l'état de l'art (**F_{c1}**, **F_{c2}**, **F_{c3}** et **F_{c4}**).

En particulier, **F₁** est plus efficace que **Fc₁** contenant le BHT, antioxydant conventionnel pour les EMAG, avec un temps d'induction de 11,56 heures contre 3,39 heures. Ainsi, le taux de traitement de l'EMC pour atteindre un gain de 2 heures en Rancimat (T_{Ind} (h) = 3,5h) est réduit d'un facteur d'environ 5. On passe de 1200 ppm pour **F_{c1}** à 240 ppm pour **F₁** ou en tenant uniquement compte de la quantité de matière active, on passe de 540 ppm pour **Fc₁** à 120 ppm pour **F₁**.

En comparant les résultats de **F₁** et **F₂,** on constate que l'ajout d'un autre composé phénolique encombré antioxydant (**C₄**) en substitution d'une partie de la composition **C₁** diminue l'effet antioxydant de la formulation **F₂**. Le composé phénolique encombré antioxydant **C₄** est donc moins efficace que la composition **C₁**. Néanmoins, **F₂** maintient un effet antioxydant à un niveau supérieur à l'objectif visé, à savoir un gain en temps d'induction supérieur à 5 heures à 1200ppm par rapport au temps d'induction de **S⁰_{EMC}**.

On ne constate pas une telle diminution du temps d'induction (T_{Ind}) en comparant les résultats obtenus pour **Fc₁** (T_{Ind} = 3,39) et ceux obtenus avec les formulations **Fc₂** (T_{Ind} = 3,3) et **Fc₃** (T_{Ind} = 4,09) correspondant à des mélanges de composés phénoliques encombrés **C₂+C₅**. L'ajout d'un autre composé phénolique encombré antioxydant (**C₅**) a peu d'effet sur l'efficacité du BHT (**C₂**). En effet, les formulations **Fc₁**, **Fc₂** et **Fc₃** ont des propriétés antioxydantes équivalentes (figure 1).

En ajoutant 2% en masse de **C₆** (DMD) au mélange **C₂+C₅**, on constate une augmentation significative d'environ 3 heures du temps d'induction pour la formulation **F_{c4}** (T_{Ind} = 6,06) comparativement à **F_{c2}** (T_{Ind} = 3,3). L'association d'un séquestrant/chélatant de métaux comme la DMD au composé phénolique encombré conventionnel améliore sensiblement la stabilité à l'oxydation.

En revanche, le séquestrant/chélatant de métaux (**C₆**) n'a quasiment aucun effet sur la stabilité à l'oxydation lorsque l'on utilise une résine **C₀** selon la présente invention, comme le montre les résultats de **F₃** (T_{Ind} = 7,3) comparativement à **F₂** (T_{Ind} = 7,06).

### Stabilité au stockage

La formulation **F_{c1}** contenant uniquement du BHT est instable à basse température dès -5°C. Les formulations comprenant la résine **C₀** selon l'invention (**F₁**, **F₂, F₃** et **F₄**) sont toutes stables au stockage non seulement à température ambiante mais également à basse température, au moins jusqu'à -10°C.

Ainsi, l'utilisation de résine **C₀** selon l'invention dans de l'EMC permet d'améliorer la stabilité au stockage à une température égale à -10°C.

### .Exemple 2 : Test de stabilité à l'oxydation (Rancimat) sur un gazole moteur (GOM) de type B100

On procède à un test Rancimat selon la norme DIN EN 15751 sur un gazole moteur de type B100, i.e. contenant 100% volume d'esters méthyliques d'huiles végétales (EMHV) non-additivé (GOM⁰) et additivé avec 1200 ppm de **F₁** ou **F_{c1}** décrites précédemment (GOM¹). Les caractéristiques du gazole moteur GOM⁰ sont réunies dans le tableau 4 ci-dessous et les résultats du test Rancimat sont répertoriés dans le tableau 5.

**Tableau 4**

| **GOM°** | |
|---|---|
| TLF (°C) NF EN 116 | -5 |
| PTR (°C) NF EN 23015 | 0 |
| MV15 (kg/m³) NF EN ISO12185 | 880 |
| Viscosité à 40°C EN ISO 3104 | 4 |
| Stabilité à l'oxydation (à 110°C, h) EN 14112 | 6.4 |
| Aromatiques totaux (% masse) NF EN 12916 | 18,2 |
| Poly Aromatiques (% masse) NF EN 12916 | 2,5 |
| Teneur en EMAG (% m/m) | 96,5 |

**Tableau 5**

| **Fₓ** | **F₁** | **F_{c1}** |
|---|---|---|
| T_{Ind} **^{GOMo}** (h) | 6,4 ± 0,1 | 6,4± 0,1 |
| T_{Ind}**^{GOM1}** (h) | 8,6 ± 0,1 | 7,7 ± 0,1 |
| Δ T_{Ind} = (T_{Ind}**^{GOM1}** - T_{Ind}**^{GOMo})** (h) | 2,2 ± 0,2 | 1,3 ± 0,2 |

L'additivation du gazole moteur de type B100 par une résine C₀ selon la présente invention permet d'atteindre un temps d'induction supérieure à 8 heures avec un gain en Rancimat de plus de 2 heures.

### .Exemple 3 : Test de stabilité à l'oxydation sur un fioul domestique (FOD)

On procède à un test de stabilité à l'oxydation selon la norme ISO 12205 sur un fuel pour chauffage, à usage domestique, également appelé FOD (acronyme de "fuel oil domestique") (**FOD°**) dont les caractéristiques sont répertoriées dans le tableau 6 ci-dessous.

**Tableau 6**

| **FOD°** | | Distillation **ASTM D86** (°C) | |
|---|---|---|---|
| Paraffines totales (%masse) | 12,95 | 0% | 158,6 |
| TLF (°C) - NF EN 116 | -5 | 5% | 183,7 |
| PTE (°C) - NF-T60-105 | -12 | 10% | 194 |
| PTR (°C) - NF EN 23015 | -5 | 20% | 215,4 |
| MV15 (kg/m³) - NF EN ISO12185 | 829,23 | 30% | 236,1 |
| Teneur en soufre (mg/kg) | 7,80 | 40% | 255,60 |
| Mono Aromatiques (% masse) - NF EN 12916 | 15,7 | 50% | 273,6 |
| Di Aromatiques (% masse) - NF EN 12916 | 2 | 60% | 289,1 |
| Tri aromatiques (% masse) - NF EN 12916 | 0,5 | 70% | 303,7 |
| Aromatiques totaux (% masse) - NF EN 12916 | 18,2 | 80% | 319,5 |
| Poly Aromatiques (% masse) - NF EN 12916 | 2,5 | 90% | 337,1 |
| Teneur en EMHV (%vol) | 0 | 95% | 350 |
| | | 100 % | 358,6 |

Le principe du test selon la norme ISO 12205 consiste à exposer l'échantillon à tester à une température de 95°C durant une période de 16 heures. Ensuite, l'échantillon est refroidi à température ambiante et filtré afin de déterminer la quantité de dépôts générés.

Le test a également été effectué sur un échantillon de **FOD¹** correspondant au FOD vierge (**FOD°**) additivé avec 120 ppm est de la formulation **F₁** décrite précédemment (50% de matière active).

Les résultats des tests de stabilité à l'oxydation sont répertoriés dans le tableau 7 ci-dessous.

**Tableau 7**

| | Stabilité à l'oxydation EN 12205 - unité g/m3 |
|---|---|
| **FOD°** | 204,3 |
| **FOD¹** | 43,23 |
| % réduction des dépôts | 78,8 % |

On constate une diminution substantielle des dépôts avec une réduction des dépôts de près de 79%. Ainsi, on en déduit que l'utilisation de résine **C₀** selon l'invention permet de réduire de façon significative (environ 80%) la quantité de dépôts formés lors du stockage du FOD.

Les résines alkylphénol-aldéhyde modifiées selon l'invention ont des propriétés particulièrement remarquables comme additif antioxydant pour les compositions de carburants ou combustibles hydrocarbonés, en particulier tels que les gazoles, les carburants diesel, les essences, les biocarburants, les carburants jet, les fiouls domestiques (FOD) et les fiouls lourds.

Les résines alkylphénol-aldéhyde modifiées selon l'invention sont particulièrement efficaces pour les compositions de carburants ou combustibles hydrocarbonés liquides qui comprennent des huiles végétales et/ou animales et/ou leurs esters. Les résines alkylphénol-aldéhyde modifiées sont particulièrement adaptées aux biodiesels d'origine animale et/ou végétale seuls ou en mélanges avec d'autres compositions de carburants ou combustibles.

En particulier, les résines alkylphénol-aldéhyde modifiées selon l'invention améliorent la stabilité à l'oxydation et/ou au stockage de compositions de carburants ou combustibles hydrocarbonés liquides qui comprennent jusqu'à 100% en masse d'esters méthyliques d'acides gras (EMAG) ou éthyliques d'acides gras (EEAG), en particulier des esters méthyliques d'huiles végétales (EMHV) ou esters éthyliques d'huiles végétales (EEHV).

## Revendications

1. Utilisation d'au moins une résine alkylphénol-aldéhyde modifiée comme additif améliorant la stabilité à l'oxydation déterminée par un test Rancimat selon la norme EN 15751 ou par un test selon la norme ISO 12205 d'une composition de carburant ou combustible hydrocarboné liquide, ladite résine alkylphénol-aldéhyde modifiée étant susceptible d'être obtenue par réaction de Mannich d'une résine de condensation alkylphénol-aldéhyde
- avec au moins un aldéhyde et/ou une cétone ayant de 1 à 8 atomes de carbone, de préférence de 1 à 4 atomes de carbone;
- et au moins un composé hydrocarboné ayant au moins un groupement alkylmonoamine ou alkylpolyamine, ayant entre 1 et 30 atomes de carbone, de préférence entre 4 et 30 atomes de carbone,
ladite résine de condensation alkylphénol-aldéhyde étant elle-même susceptible d'être obtenue par condensation
- d'au moins un alkylphénol substitué par au moins un groupement alkyle, linéaire ou ramifié, ayant de 1 à 30 atomes de carbone, de préférence un monoalkylphénol,
- avec au moins un aldéhyde et/ou une cétone ayant de 1 à 8 atomes de carbone, de préférence de 1 à 4 atomes de carbone.

2. Utilisation selon la revendication 1, dans laquelle la résine alkylphénol-aldéhyde modifiée est utilisée comme additif sous une forme diluée dans un solvant, de préférence aromatique.

3. Utilisation selon l'une quelconque des revendications 1 et 2, dans laquelle la résine alkylphénol-aldéhyde modifiée est utilisée dans la composition de carburant ou combustible hydrocarboné liquide en association avec un ou plusieurs additifs additionnels.

4. Utilisation selon la revendication 3, dans laquelle les additifs additionnels sont choisis parmi les dispersants/détergents, les huiles porteuses, les désactivateurs de métaux, les passivateurs métalliques, les antioxydants, les colorants, les additifs antistatiques, les inhibiteurs de corrosion, les biocides, les marqueurs, les stabilisateurs thermiques, les émulsifieurs, les additifs antistatiques, les agents réducteurs de frottements, les surfactants, les améliorants de cétanes, les agents anti-trouble, les additifs améliorant la conductivité, les réodorants, les additifs d'onctuosité, les lubrifiants et leurs mélanges.

5. Utilisation selon l'une quelconque des revendications 1 à 4, dans laquelle la composition de carburant ou combustible hydrocarboné liquide est additivée avec une quantité de résine alkylphénol-aldéhyde modifiée comprise entre 5 et 5000 ppm massique, de préférence entre 10 et 2000 ppm, plus préférentiellement entre 50 et 1200 ppm, encore plus préférentiellement entre 50 et 600 ppm.

6. Utilisation selon l'une quelconque des revendications 1 à 5, dans laquelle la composition de carburant ou combustible hydrocarboné liquide comprend un carburant ou combustible hydrocarboné liquide choisi parmi les gazoles, les carburants diesel, les essences, les biocarburants, les carburants jet, les fiouls domestiques (FOD) et les fiouls lourds.

7. Utilisation selon l'une quelconque des revendications 1 à 6, dans laquelle la composition de carburant ou combustible hydrocarboné liquide comprend un carburant ou combustible choisi parmi les distillais moyens de température d'ébullition comprise entre 100 et 500°C, de préférence 140 à 400 °C.

8. Utilisation selon l'une quelconque des revendications 1 à 7, dans laquelle la composition carburant ou combustible hydrocarboné liquide comprend des huiles végétales et/ou animales et/ou leurs esters et/ou, des biodiesels d'origine animale et/ou végétale.

9. Utilisation selon la revendication 8, dans laquelle les esters sont des esters méthyliques d'acides gras (EMAG) ou éthyliques d'acides gras (EEAG), de préférence, des esters méthyliques d'huiles végétales (EMHV) ou esters éthyliques d'huiles végétales (EEHV).

10. Utilisation selon la revendication 9, dans laquelle la composition carburant ou combustible hydrocarboné liquide est un biodiesel de type B100 et dont la valeur du temps d'induction (T_{ind}) obtenue par un test Rancimat selon la norme DIN EN 15751 est supérieure ou égale à 8 heures.

11. Utilisation selon la revendication 10, dans laquelle un gain en valeur de temps d'induction (ΔT_{ind}) obtenu par le test Rancimat selon la norme DIN EN 15751 est supérieur ou égal à 2.

12. Utilisation selon l'une quelconque des revendications 1 à 11, dans laquelle la résine alkylphénol-aldéhyde modifiée est susceptible d'être obtenue à partir d'au moins un alkylphénol substitué en para, de préférence à partir du p-nonylphénol.

13. Utilisation selon l'une quelconque des revendications 1 à 12, dans laquelle la résine alkylphénol-aldéhyde modifiée est susceptible d'être obtenue à partir d'au moins un aldéhyde et/ou une cétone choisi parmi le formaldéhyde, l'acétaldéhyde, le propionaldéhyde, le butyraldéhyde, le 2-éthyl hexanal, le benzaldéhyde, l'acétone, et de préférence à partir d'au moins le formaldéhyde.

14. Utilisation selon l'une quelconque des revendications 1 à 13, dans laquelle la résine alkylphénol-aldéhyde modifiée est obtenue à partir d'au moins une alkylamine ayant au moins un groupement aminé primaire.

15. Utilisation selon l'une quelconque des revendications 1 à 14, dans laquelle la résine alkylphénol-aldéhyde modifiée est susceptible d'être obtenue à partir d'au moins une alkylamine à chaîne grasse ou d'un mélange d'alkylamines à chaîne grasse, et de préférence d'alkylamine(s) ayant un nombre d'atomes de carbone entre 12 et 24, de préférence entre 12 et 22.

## Patentansprüche

1. Verwendung von mindestens einem modifizierten Alkylphenol-Aldehydharz als Additiv zur Verbesserung der Oxidationsstabilität, die bestimmt wird durch einen Rancimat-Test gemäß der Norm EN 15751 oder durch einen Test gemäß der Norm ISO 12205 einer Zusammensetzung von Kraftstoff oder einem flüssigen Kohlenwasserstoffbrennstoff, wobei das modifizierte Alkylphenol-Aldehydharz durch eine Mannich-Reaktion aus einem Alkylphenol-Aldehyd-Kondensationsharz erhalten werden kann,
- mit mindestens einem Aldehyd und/oder einem Keton mit 1 bis 8 Kohlenstoffatomen, vorzugsweise 1 bis 4 Kohlenstoffatomen;
- und mindestens einer Kohlenwasserstoffverbindung mit mindestens einer Alkylmonoamin- oder Alkylpolyamin-Gruppe, mit zwischen 1 und 30 Kohlenstoffatomen, vorzugsweise zwischen 4 und 30 Kohlenstoffatomen,
wobei das Alkylphenol-Aldehyd-Kondensationsharz selbst durch Kondensation erhalten werden kann,
- von mindestens einem Alkylphenol, subsituiert durch mindestens eine Alkylgruppe, linear oder verzweigt, mit 1 bis 30 Kohlenstoffatomen, vorzugsweise einem Monoalkylphenol,
- mit mindestens einem Aldehyd und/oder einem Keton mit 1 bis 8 Kohlenstoffatomen, vorzugsweise 1 bis 4 Kohlenstoffatomen.

2. Verwendung nach Anspruch 1, wobei das modifizierte Alkylphenol-Aldehydharz als Additiv in einer in einem, vorzugsweise aromatischen, Lösungsmittel verdünnten Form verwendet wird.

3. Verwendung nach einem der Ansprüche 1 und 2, wobei das modifizierte Alkylphenol-Aldehydharz in einer Zusammensetzung von Kraftstoff oder einem flüssigen Kohlenwasserstoffbrennstoff in Verbindung mit einem oder mehreren zusätzlichen Additiven verwendet wird.

4. Verwendung nach Anspruch 3, wobei die zusätzlichen Additive gewählt werden aus Dispergier-/Reinigungsmitteln, Trägerölen, Metalldesaktivatoren, Metallpassivatoren, Antioxidantien, Farbstoffen, antistatischen Additiven, Korrosionsinhibitoren, Bioziden, Markern, Wärmestabilisatoren, Emulgatoren, antistatischen Additiven, reibungsvermindernden Mitteln, Tensiden, Cetanzahlverbesserern, Antitrübungsmitteln, Additiven zur Verbesserung der Leitfähigkeit, Reodorantien, Schmierfähigkeitsadditiven, Schmiermitteln und ihren Mischungen.

5. Verwendung nach einem der Ansprüche 1 bis 4, wobei der Zusammensetzung von Kraftstoff oder einem flüssigen Kohlenwasserstoffbrennstoff eine Menge von modifiziertem Alkylphenol-Aldehydharz zugesetzt wird, die zwischen 5 und 5 000 Massen-ppm beträgt, vorzugsweise zwischen 10 und 2 000 ppm, besonders bevorzugt zwischen 50 und 1 200 ppm, ganz besonders bevorzugt zwischen 50 und 600 ppm.

6. Verwendung nach einem der Ansprüche 1 bis 5, wobei die Zusammensetzung von Kraftstoff oder einem flüssigen Kohlenwasserstoffbrennstoff einen Kraftstoff oder flüssigen Kohlenwasserstoffbrennstoff umfasst, der gewählt wird aus Gasölen, Dieselkraftstoffen, Benzinen, Biokraftstoffen, Kerosinen, Heizölen (FOD) und Schwerölen.

7. Verwendung nach einem der Ansprüche 1 bis 6, wobei die Zusammensetzung von Kraftstoff oder einem flüssigen Kohlenwasserstoffbrennstoff einen Kraftstoff oder Brennstoff umfasst, der gewählt wird aus Mitteldestillaten mit einer Siedetemperatur, die zwischen 100 und 500 °C beträgt, vorzugsweise 140 bis 400 °C.

8. Verwendung nach einem der Ansprüche 1 bis 7, wobei die Zusammensetzung von Kraftstoff oder einem flüssigen Kohlenwasserstoffbrennstoff pflanzliche und/oder tierische Öle und/oder ihre Ester und/oder Biodiesel tierischen und/oder pflanzlichen Ursprungs umfasst.

9. Verwendung nach Anspruch 8, wobei die Ester Fettsäuremethylester (EMAG) oder Fettsäureethylester (EEAG) sind, vorzugsweise Pflanzenöl-Methylester (EMHV) oder Pflanzenöl-Ethylester (EEHV).

10. Verwendung nach Anspruch 9, wobei die Zusammensetzung von Kraftstoff oder einem flüssigen Kohlenwasserstoffbrennstoff ein Biodiesel vom Typ B100 ist und dessen Wert der Induktionszeit (T_{ind}), der durch einen Rancimat-Test gemäß der Norm DIN EN 15751 erhalten wird, größer oder gleich 8 Stunden ist.

11. Verwendung nach Anspruch 10, wobei eine Zunahme an dem Wert der Induktionszeit (ΔT_{ind}), der durch einen Rancimat-Test gemäß der Norm DIN EN 15751 erhalten wird, größer oder gleich 2 ist.

12. Verwendung nach einem der Ansprüche 1 bis 11, wobei das modifizierte Alkylphenol-Aldehydharz ausgehend von mindestens einem Alkylphenol mit para-Substitution erhalten werden kann, vorzugsweise ausgehend von einem p-Nonylphenol.

13. Verwendung nach einem der Ansprüche 1 bis 12, wobei das modifizierte Alkylphenol-Aldehydharz ausgehend von mindestens einem Aldehyd und/oder einem Keton erhalten werden kann, gewählt aus Formaldehyd, Acetaldehyd, Propionaldehyd, Butyraldehyd, 2-Ethyl-Hexanal, Benzaldehyd, Aceton, und vorzugsweise ausgehend von mindestens dem Formaldehyd.

14. Verwendung nach einem der Ansprüche 1 bis 13, wobei das modifizierte Alkylphenol-Aldehydharz ausgehend von mindestens einem Alkylamin mit mindestens einer primären Aminogruppe erhalten wird.

15. Verwendung nach einem der Ansprüche 1 bis 14, wobei das modifizierte Alkylphenol-Aldehydharz ausgehend von mindestens einem Alkylamin mit Fettkette oder von einem Alkylamingemisch mit Fettkette und vorzugweise von Alkylamin(en) mit einer Anzahl von Kohlenstoffatomen erhalten werden kann, die zwischen 12 und 24, vorzugsweise zwischen 12 und 22, beträgt.

## Claims

1. Use of at least one modified alkylphenol-aldehyde resin as additive for improving the oxidation stability - determined by a Rancimat test according to standard EN 15751 or by a test according to standard ISO 12205 - of a motor fuel or liquid hydrocarbon-containing fuel composition, said modified alkylphenol-aldehyde resin being obtainable by Mannich reaction of an alkylphenol-aldehyde condensation resin
▪ with at least one aldehyde and/or one ketone having from 1 to 8 carbon atoms, preferably from 1 to 4 carbon atoms;
▪ and at least one hydrocarbon-containing compound having at least one alkylmonoamine or alkylpolyamine group, having between 1 and 30 carbon atoms, preferably between 4 and 30 carbon atoms,
said alkylphenol-aldehyde condensation resin itself being obtainable by condensation
▪ of at least one alkylphenol substituted with at least one linear or branched alkyl group having from 1 to 30 carbon atoms, preferably a monoalkylphenol,
▪ with at least one aldehyde and/or one ketone having from 1 to 8 carbon atoms, preferably from 1 to 4 carbon atoms.

2. Use according to claim 1, wherein the modified alkylphenol-aldehyde resin is used as an additive in a form diluted in a solvent, preferably aromatic.

3. Use according to any one of claims 1 and 2, wherein the modified alkylphenol-aldehyde resin is used in the motor fuel or liquid hydrocarbon-containing fuel composition in combination with one or more additional additives.

4. Use according to claim 3, wherein the additional additives are selected from dispersants/detergents, carrier oils, metal deactivators, metallic passivators, antioxidants, dyes, antistatic additives, corrosion inhibitors, biocides, markers, thermal stabilizers, emulsifiers, friction reducing agents, surfactants, cetane improvers, anti-clouding agents, additives improving the conductivity, reodorants, lubricity additives, lubricants and mixtures thereof.

5. Use according to any one of claims 1 to 4, wherein an amount of modified alkylphenol-aldehyde resin comprised between 5 and 5000 ppmw, preferably between 10 and 2000 ppm, more preferably between 50 and 1200 ppm, even more preferably between 50 and 600 ppm, is added to the motor fuel or liquid hydrocarbon-containing fuel composition.

6. Use according to any one of claims 1 to 5, wherein the motor fuel or liquid hydrocarbon-containing fuel composition comprises a motor fuel or liquid hydrocarbon-containing fuel selected from gas oils, diesel fuels, gasolines, biofuels, jet fuels, domestic fuel oils (DFO) and heavy fuel oils.

7. Use according to any one of claims 1 to 6, wherein the motor fuel or liquid hydrocarbon-containing fuel composition comprises a motor fuel or other fuel selected from the middle distillates with a boiling point temperature comprised between 100 and 500°C, preferably 140 to 400°C.

8. Use according to any one of claims 1 to 7, wherein the motor fuel or liquid hydrocarbon-containing fuel composition comprises vegetable and/or animal oils and/or esters thereof and/or biodiesels of animal and/or vegetable origin.

9. Use according to claim 8, wherein the esters are fatty acid methyl esters (FAME) or fatty acid ethyl esters (FAEE), preferably vegetable oil methyl esters (VOME) or vegetable oil ethyl esters (VOEE).

10. Use according to claim 9, wherein the motor fuel or liquid hydrocarbon-containing fuel composition is a biodiesel of type B100 and whose value of induction time (T_{ind}) obtained by a Rancimat test according to standard DIN EN 15751 is greater than or equal to 8 hours.

11. Use according to claim 10, wherein a gain in value of induction time (ΔT_{ind}) obtained by the Rancimat test according to standard DIN EN 15751 is greater than or equal to 2.

12. Use according to any one of claims 1 to 11, wherein the modified alkylphenol-aldehyde resin can be obtained from at least one para-substituted alkylphenol, preferably from p-nonylphenol.

13. Use according to any one of claims 1 to 12, wherein the modified alkylphenol-aldehyde resin can be obtained starting from at least one aldehyde and/or one ketone selected from formaldehyde, acetaldehyde, propionaldehyde, butyraldehyde, 2-ethylhexanal, benzaldehyde, acetone, and preferably starting from at least formaldehyde.

14. Use according to any one of claims 1 to 13, wherein the modified alkylphenol-aldehyde resin is obtained starting from at least one alkylamine having at least one primary amine group.

15. Use according to any one of claims 1 to 14, wherein the modified alkylphenol-aldehyde resin can be obtained starting from at least one fatty-chain alkylamine or from a mixture of fatty-chain alkylamines, and preferably alkylamine(s) having a number of carbon atoms between 12 and 24, preferably between 12 and 22.
